# EUROPÄISCHE PATENTSCHRIFT

(11) **EP 0 490 376 B1**
(45) Veröffentlichungstag und Bekanntmachung des Hinweises auf die Patenterteilung: **08.11.1995**
(21) Anmeldenummer: 91121323.9
(22) Anmeldetag: 12.12.1991
(51) Int. Cl.: B25B 23/142

(54) **Drehmomentschlüssel**
Torque wrench
Clef dynamométrique

(30) Priorität: 13.12.1990 DE 4039794
(43) Veröffentlichungstag der Anmeldung: 17.06.1992
(73) Patentinhaber: Saltus-Werk Max Forst GmbH & Co., D-42659 Solingen (DE)
(72) Erfinder: Schönberger, Heinz, W-5650 Solingen 1 (DE); Humme, Frank, W-5650 Solingen 1 (DE); Wirtz, Peter, W-5630 Remscheid (DE)
(74) Vertreter: Müller, Enno, Dipl.-Ing.

(56) Entgegenhaltungen:
- EP-A- 0 133 557
- EP-A- 0 172 120
- EP-A- 0 210 892

## Beschreibung

Die Erfindung betrifft einen Drehmomentschlüssel mit einer elektronischer Meßeinrichtung, die mittels Dehnungsmeßstreifen ein herrschendes Drehmoment erfaßt, mit einem Speicher zur Speicherung von Meßwerten und einer Anzeigeeinrichtung, die mittels farbig unterschiedlicher Leuchtdioden erreichte Minimal- beziehungsweise Maximalwerte anzeigen.

Drehmomentschlüssel sind bereits in verschiedenen Ausgestaltungen bekannt geworden. Hierzu wird beispielsweise auf die FR-PS 2497347 und auf die US-Patentschriften 3 970 155, 4 006 629 und 4 522 075 hingewiesen. Weiter ist ein derartiger Drehmomentschlüssel aus der EP-A 0 133 557 bekanntgeworden.

Den bekannten Drehmomentschlüsseln ist gemeinsam, daß sie für einen möglichst problemlosen Einsatz in einer Fertigung, bei einer Montage oder zu Instandhaltungsarbeiten etwa noch nicht zufriedenstellend sind. So wird zum einen ein zu hohes Gewicht solcher Drehmomentschlüssel bemängelt. Darüber hinaus ist auch die Kontrolle, ob ein aufgebrachtes Drehmoment den gewünschten Wert erreicht hat, nicht immer einfach. So weist zum Beispiel der aus der EP-A 0 133 557 bekannte Drehmomentschlüssel einen Mikroprozessor mit Tastatur auf, über die jeweils gewünschten Daten wie Sollwerte, Grenzwerte, Anziehverfahren etc. als Vorgabewerte eingebbar sind. Entsprechend diesen Vorgaben wird der Anziehvorgang, zum Beispiel einer Schraube überwacht. Bei Erreichen eines bestimmten Grenzwertes erfolgt dabei eine automatische Abspeicherung dieses erreichten Wertes. Ein derartig ausgestatteter Drehmomentschlüssel stellt an das Bedienpersonal erhebliche Anforderungen, ist hinsichtlich seiner Ausgestaltung mit Tastatur und Display sehr empfindlich und darüber hinaus für lediglich eine Arbeitskontrolle zu aufwendig gestaltet.

Ausgehend von dem vorgenannten, insbesondere aus der EP-A 0 133 557 bekannten Stand der Technik stellt sich der Erfindung daher die Aufgabe, einen Drehmomentschlüssel anzugeben, der bei einfacher Handhabe möglichst einfach ausgebildet ist und auch eine Auswertung von gleichartigen Drehmomentschlüsseln in einfacher Form ermöglicht.

Diese Problematik ist bei dem in Anspruch 1 angegebenen Drehmomentschlüssel gelöst. Hierbei ist darauf abgestellt, daß ein Meßwert durch Betätigung eines Betätigungsknopfes abspeicherbar ist und eine detaillierte Anzeige eines Meßwertes und eine Änderung der Einstellung des Schlüssels lediglich bei Anschluß an ein gesondertes Programmgerät möglich ist, wozu an dem Drehmomentschlüssel eine entsprechende Schnittstelle ausgebildet ist. Erfindungsgemäß ist die Betätigbarkeit und auch Änderbarkeit des Drehmomentschlüssels als solches stark reduziert. Es ist lediglich während des Betriebes eine Abspeicherung eines Meßwertes mittels eines Betätigungsknopfes möglich. Diese Abspeicherung erfolgt jeweils willensbetont bei Erreichen eines bestimmten Drehmomentwertes, der über die Leuchtdioden angezeigt werden kann. Dadurch, daß eine besondere Schnittstelle zu einem Programmiergerät an dem Drehmomentschlüssel ausgebildet ist, ist es möglich, durch Anschluß des Drehmomentschlüssels an dieses Programmiergerät -und nur dadurch- die Einstellung des Schlüssels, beispielsweise Vorgabe der Sollwerte, zu ändern, die abgespeicherten Meßwerte auszulösen und auszuwerten und auch eine detaillierte Anzeige eines Meßwertes -etwa in digitaler Form- vorzunehmen. In weiterer Ausgestaltung ist vorgesehen, daß dem Drehmomentschlüssel ein Identifizierungscode, zum Beispiel eine Schlüsselnummer, zugeordnet ist, daß dieser Identifizierungscode im Speicher abgelegt und lediglich bei Anschluß an das gesonderte Programmiergerät änderbar ist. Über diese Identifizierung des Schlüssels können auch eine Vielzahl von Schlüsseln untereinander vom Programmiergerät unterschieden werden und in einer Fertigung nachher hinsichtlich der abgearbeiteten Drehmomente überprüft werden, indem die in dem Speicher des Schlüssels abgelegten Drehmomentwerte ausgelesen werden und die so gewonnenen Werte in Verknüpfung mit dem bekannten Einsatzort bzw. der bekannten Einsatzfolge der Schlüssel ausgewertet werden. Grundsätzlich muß bei einem solchen Drehmomentschlüssel auch die Möglichkeit gegeben sein, diesen zu kalibrieren, d.h. daß die abgespeicherten und nachher angezeigten Werte mit den gewünschten realen Werten übereinstimmen. Im Rahmen der Erfindung bevorzugt ist weiterhin, daß auch eine solche Kalibrierung lediglich über ein Programmiergerät oder ein sonstiges Bediengerät, das an den Drehmomentschlüssel erst gesondert anzuschließen ist, durchführbar ist. Aufgrund der bereits oben erwähnten Speicherbarkeit der Meßwerte im übrigen in dem Drehmomentschlüssel und der Festsetzbarkeit der Kalibrierwerte und der Identifizierungsnummer, welche ebenfalls beispielsweise als elektronischer Code in einem Speicher des Schlüssels angelegt ist, ist es möglich, während des normalen Betriebes, während einer normalen Arbeitsabfolge, den Drehmomentschlüssel unabhängig von dem Bediengerät bzw. dem Programmiergerät zu benutzen. Der jeweilige Benutzer kann in diese Einstellungen überhaupt nicht eingreifen. Zur Anzeige, ob ein aufgebrachter Drehmomentwert im gewünschten Bereich angesiedelt ist, sind bevorzugt zwei farblich unterschiedliche Leuchtdioden vorgesehen. Beispielsweise eine grüne Leuchtdiode, die aufleuchtet, wenn der gewünschte Bereich des Drehmomentes erreicht ist und eine rote Leuchtdiode, wenn dieser Bereich überschritten ist. Weiterhin ist bevorzugt zur möglichst einfachen Bedienbarkeit des Drehmomentschlüssels, daß zur Betätigung der Elektronik des Drehmomentschlüssels an dem Schlüssel lediglich ein Betätigungsknopf vorgesehen ist. Wenn ein Drehmoment aufgebracht wird und beispielsweise die grüne Leuchtdiode aufleuchtet, kann über den Betätigungsknopf der jeweilige - für den Benutzer exakt nicht erkennbare - Wert abgespeichert werden. Dies geschieht dann durch eine Quittierung mittels Knopfdruck auf den Betätigungsknopf. Der gemessene, gegebenenfalls zwischengespeicherte Wert des aufgewendeten Drehmoments wird dann im Meßwertspeicher abgelegt. Aufgrund der beschriebenen Funktionen der Elektronik ist es sogar möglich, innerhalb eines vorgegebenen Arbeitszyklus wechselnde Bereiche für das aufzubringenden Drehmoment vorzuprogrammieren. Weiterhin ist bevorzugt, daß die gesamte beschriebene Elektronik im Griffbereich des Schraubenschlüssels untergebracht ist, welcher bevorzugt rohrförmig ausgebildet ist. Gegenüber einem gewöhnlichen Drehmomentschlüssel ergeben sich also äußerlich keine Unterschiede, mit Ausnahme einer im Griffbereich, vorzugsweise endseitig, vorgesehener Schnittstelle zum Anschluß an das Programmiergerät und mit Ausnahme der zwei oder drei Leuchtdioden und des Betätigungsknopfes. Die elektronische Schaltung kann als ein mit Speicherelementen zusammenwirkender Mikroprozessor ausgebildet sein, der nach einem vorgegebenen Programm arbeitet, welches z.B. in einem ROM des Schlüssels abgelegt sein kann. Der Speicher, bei dem es sich um einen Halbleiterspeicher handelt, ist bevorzugt so dimensioniert, daß eine Vielzahl von Meßwerten gleichzeitig im Speicher gehalten werden können. Als Stromversorgung kann ein Akkumulator Verwendung finden. Um eine noch genauere Identifizierung erreichen zu können, ist es möglich, die Meßwerte einer Uhrzeit zuzuordnen. Beim Ausdrucken der Meßwerte erfolgt die Angabe der Min- und Max-Werte mit der entsprechenden Uhrzeit. Eine baulich günstige Ausgestaltung des Drehmomentschlüssels ist darin zu sehen, das Rohr mit einem Handgriff zu bestücken, welcher sich in Richtung des anderen Rohrendes in eine sowohl die Leuchtdioden als auch den Betätigungsknopf aufnehmenden Zunge fortsetzt. Auf diese Weise läßt sich eine geschützte Anordnung insbesondere der Leuchtdioden realisieren. Dabei ist vorgesehen, daß die Zunge dem Krümmungsverlauf des Rohres angepaßt ist und sich, ausgehend von der Zungenspitze, in Richtung des Handgriffes verbreitert. Alternativ sind auch Leuchtringe zur besseren Erkennung einsetzbar.

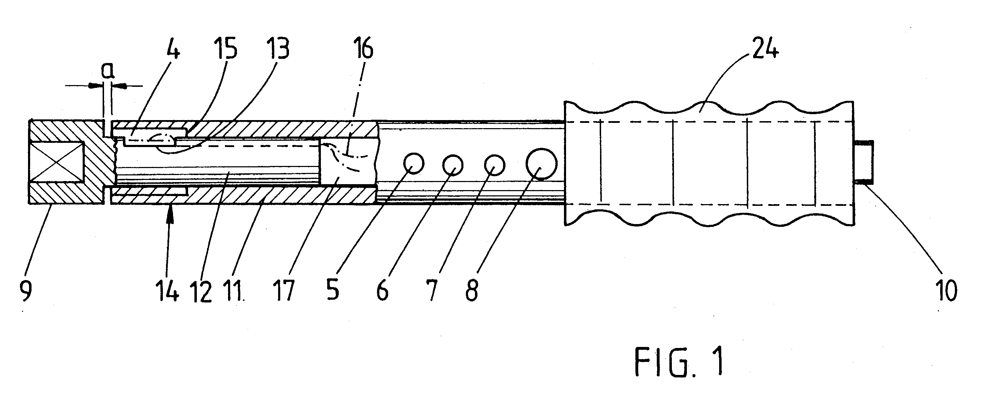

Nachstehend ist die Erfindung des weiteren anhand der beigefügten Zeichnung, die jedoch lediglich ein Ausführungsbeispiel darstellt, erläutert. Hierbei zeigt
- Fig. 1: eine Seitenansicht eines Drehmomentschlüssels erster Ausführungsform;
- Fig. 2: den Drehmomentschlüssel gemäß Fig. 1, geschnitten, ohne Elektronik;
- Fig. 3: einen Drehmomentschlüssel zweiter Ausführungsform;
- Fig. 4: Programmier- und Auswerteschaltungen für die Drehmomentschlüssel; und
- Fig. 5: in perspektivischer Darstellung eine dritte Ausführungsform des Drehmomentschlüssels.

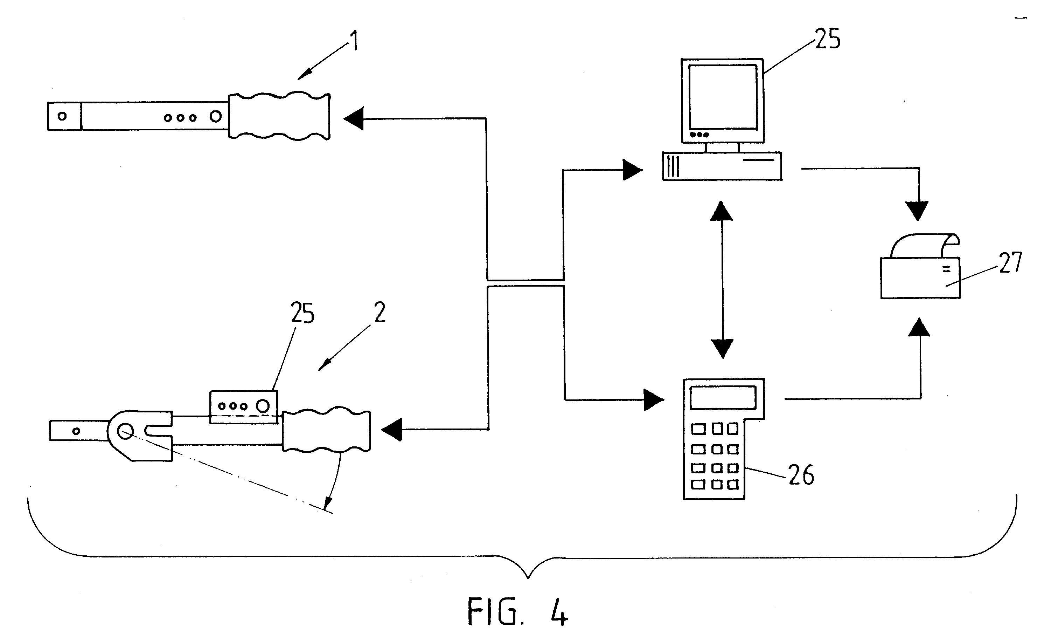

Dargestellt und beschrieben ist ein Drehmomentschlüssel 1 bzw. 2 (vgl. Fig. 3) mit einer elektronischen Meßeinrichtung, die mittels Dehnungsmeßstreifen 4 ein herrschendes Drehmoment erfaßt. Die Dehnungsmeßstreifen 4 sind in an sich bekannter Weise in einer Brückenschaltung zusammengeschaltet, beispielsweise in der bekannten Wheatstone'schen Brückenschaltung.

Das über die Dehnungsmeßstreifen 4 erfaßte Drehmoment wird in einem in der Elektronik vorgesehenen Speicher gespeichert. Weiter ist eine Anzeigevorrichtung in Form von Leuchtdioden 5, 6, 7 vorgesehen, welche zur Anzeige erreichter Minimal- bzw. Maximalwerte dient.

Bei der Durchführung einer Messung leuchtet bei Belastung zunächst beispielsweise die Leuchtdiode 7 blinkend auf. Dies dient allein zur Anzeige des Zustandes, daß eben eine Belastung vorliegt. Diese Leuchtdiode kann auch farblich, beispielsweise gelb ausgestaltet sein. Sie leuchtet ständig auf, wenn das Ist-Moment einen gewissen Prozentsatz unter dem Min-Wert liegt. Der Prozentsatz kann bedienerabhängig freigewählt werden. Mit zunehmender Belastung wird dann die untere Grenze des im voraus eingestellten Bereiches für das aufzubringende Drehmoment erreicht. Bei Überschreiten dieser unteren Grenze leuchtet die Diode 6 auf, die farblich grün gestaltet ist. Wird dann die Kraft noch weiter vergrößert und etwa die obere Grenze des zulässigen Drehmomentes überschritten, so leuchtet die Leuchtdiode 5 dauernd auf, die farblich rot gestaltet ist. Dem Benutzer wird damit die Erkenntnis vermittelt, daß er in der Kraftaufbringung nachlassen muß bzw. die Schraube zurückdrehen muß, um wieder in den zulässigen Bereich des Drehmomentes zu gelangen. Der Wert des bei der Betätigung aufgebrachten Drehmomentes ist nach der Betätigung noch verfügbar, beispeilsweise in einem Zwischenspeicher.

Ein so aufgebrachtes Drehmoment wird durch Betätigung des Druckknopfes 8 dann abgespeichert. Der Betätigungsknopf 8 muß aktiv von dem Benutzer des Drehmomentschlüssels betätigt werden. Nach Abspeicherung ist der Drehmomentschlüssel für die nächste Beaufschlagung und Abspeicherung bereit. Ist vorgesehen, daß ein Zyklus von mehreren u.a. auch verschiedenen Drehmomentwerten nacheinander abgearbeitet werden soll, wird der Schlüssel von der elektronischen Schaltung, bei der es sich beispielsweise um einen nach einem Programm arbeitenden Mikroprozessor handeln kann, auf den darauffolgenden Wert eingestellt.

An dem dem vorderen Schlüsselkopf 9 entgegengesetzten Ende ist eine Schnittstelle 10 ausgebildet. An diese Schnittstelle 10 kann eine Verbindung zu einer Auswerteeinrichtung, wie dies weiter unten in Bezug auf Fig. 4 noch im einzelnen erläutert ist, angeschlossen werden.

Weiterhin ist vorgesehen, daß in der Schaltung des Drehmomentschlüssels eine Schlüsselidentifizierung abspeicherbar ist und daß eine Änderung der Schlüsselidentifizierung lediglich bei Anschluß an ein gesondertes Programmiergerät durchführbar ist. Zur Übermittlung der abgespeicherten Meßwerte, zum Auslesen der Schlüsselidentifizierung und zum Einstellen neuer Werte sowie zum Programmieren arbeitet die elektronische Schaltung mit dem Programmiergerät zusammen.

Aus der vorstehenden Erläuterung ergibt sich auch, daß ein gemessenes Drehmoment lediglich hinsichtlich eines Erreichens bzw. Überschreitens des voreingestellten Drehmomentbereichs anzeigbar ist. Eine digitale, fortlaufende Anzeige des jeweils herrschenden Drehmomentes ist nicht vorgesehen.

Weiterhin ist auch vorgesehen, daß der Drehmomentschlüssel lediglich bei Anschluß an das gesonderte Programmiergerät kalibrierbar ist. Nur bei Anschluß an das gesonderte Programmiergerät kann das durch die Dehnungsmeßstreifen 4 erzeugte Signal einem realen, bekannten Drehmoment zugeordnet und damit verglichen bzw. eingestellt werden.

Zur gesamten Betätigung des Drehmomentschlüssels ist der einzige vorgesehene Betätigungsknopf 8 ausreichend.

Grundsätzlich kann eine solche Ausgestaltung getroffen sein, daß der Drehmomentschlüssel über diesen Betätigungsknopf 8 an- und ausgeschaltet wird. Darüber hinaus kann auch vorgesehen sein, daß, wie an sich für elektronische Geräte bekannt, eine Ruheschaltung ausgebildet ist, d.h. daß sich das Gerät selbsttätig abschaltet, wenn über einen gewissen, vorgegebenen Zeitraum keine Aktivität auftritt.

Wesentlich ist weiterhin, daß die gesamte Elektronik innerhalb eines Rohres 11 des Drehmomentschlüssels angeordnet ist. Die Speicher sind bevorzugt als statische Halbleiter-Chips ausgebildet und wirken mit einem elektronischen Netzwerk des Schlüssels zusammen, welches auch die Kommunikation mit dem Programmiergerät übernimmt. Die gewöhnlichen, von mechanischen Drehmomentschlüsseln her bekannten Abmessungen werden also durch die Elektronik nicht vergrößert. In dem Rohr 11 ist im vorderen Bereich ein Hebel 12 aufgenommen, an welchem die Dehnungsmeßstreifen 4 sitzen. Der Hebel 12 ist hierzu bei 13 flach abgefräst, um eine Fläche zur Aufbringung der Dehnungsmeßstreifen 4 zu erhalten.

Weiter ist das Rohr 11 in seinem vorderen Bereich 14 ausgedreht, so daß es zu einer inneren Stufe 15 kommt. Aufgrund dieser Stufe 15 umgibt das Rohr den Hebel 12 im Bereich der Dehnungsmeßstreifen 4 mit seitlichem Abstand. Bei einer Betätigung des Drehmomentschlüssels 1 bzw. 2 kann sich also der Hebel 12 in dem vorderen Bereich 14 des Rohres 11 verbiegen. Stirnseitig des Rohres 11 ist auch ein Abstand a zu einem Schlüsselkopf 9 vorgesehen.

Von den Dehnungsmeßstreifen 4 sind Verbindungsleitungen 16 in den Innenraum 17 des Rohres 11 geführt. In dem Innenraum 17 sind die notwendigen Elektronikbausteine angeordnet, gegebenenfalls auch die Stromversorgung.

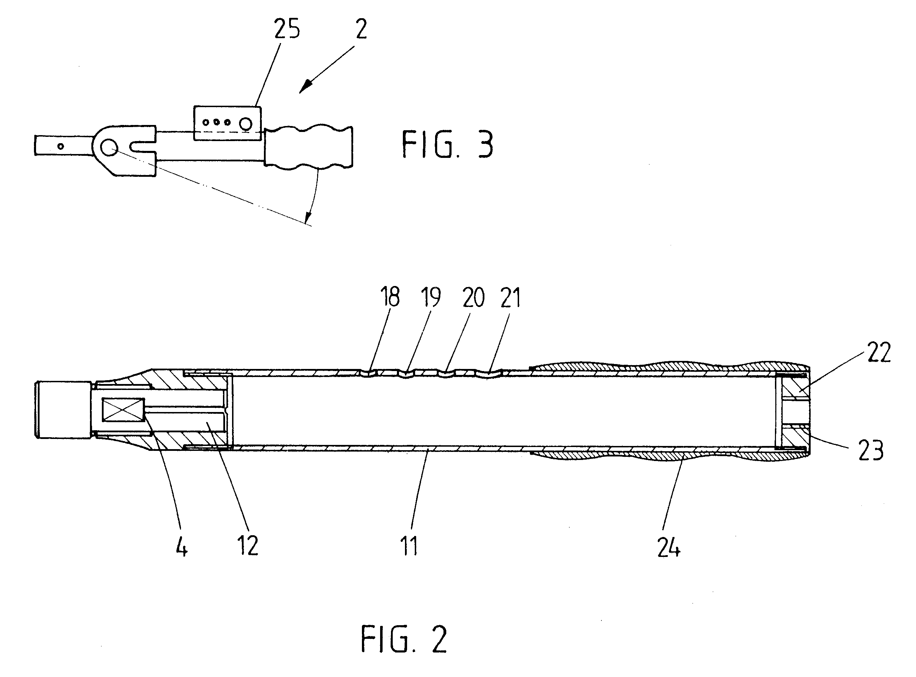

Dieser Aufbau des Drehmomentschlüssels 1 bzw. 2 ist durch die Schnittdarstellung gemäß Fig. 2 noch besser ersichtlich. Hier ist auch die Abflachung 13 des Hebels 12 in einer Draufsicht verdeutlicht. Weiter sind in dem Rohr 11 die Durchbrechungen bzw. Bohrungen 18-21 für die Leuchtdioden 5-8 zu erkennen.

Im hinteren, einen Handgriff 24 tragenden Endbereich des Rohres 11 ist ein Verschluß 22 angeordnet, der eine Bohrung 23 besitzt, um die Schnittstelle 10 zum Anschluß an ein Programmiergerät bzw. sonstiges Datenverarbeitungsgerät durchführen zu können.

Damit der Drehmomentschlüssel beim Arbeiten gut in der Hand liegt, ist der Handgriff 24 mit einer Profilierung versehen.

Bei dem Drehmomentschlüssel gemäß Fig. 3 handelt es sich um einen abknickenden Drehmomentschlüssel. Grundsätzlich ist dieser genauso aufgebaut wie der Drehmomentschlüssel 1.

Bei dem Drehmomentschlüssel 2 gemäß Fig. 3 ist jedoch die Anzeigeeinrichtung, d.h. die Leuchtdioden 5-7 und der Druckknopf 8 in einem das Rohr 11 überragenden Gehäuse 25 untergebracht.

Aus Fig. 4 ist die mögliche Programmierung und das mögliche Herauslesen der gemessenen Werte ersichtlich. Hierzu wird an die Schnittstelle ein Personalcomputer 25 oder ein tragbares Programmiergerät 26 angeschlossen. Über einen Drucker 27 können die Werte ausgedruckt werden.

Über die Programmiergeräte 25 bzw. 26 können also sowohl jeweils gemessene und über einen Arbeitszyklus abgespeicherte Drehmomentwerte ausgelesen wie auch ein Drehmomentschlüssel 1 bzw. 2 neu programmiert werden. Hierzu können über die Geräte 25 bzw. 26 die Drehmomentbereiche und die Schlüsselidentifizierung beispielsweise geändert werden. Auch können für einen bestimmten Arbeitszyklus unterschiedliche Drehmomentbereiche vorgegeben werden. Beispielsweise für die ersten zehn Arbeitsgänge ein Drehmomentbereich x und für die Zweiten zehn Arbeitsgänge ein Drehmomentbereich y.

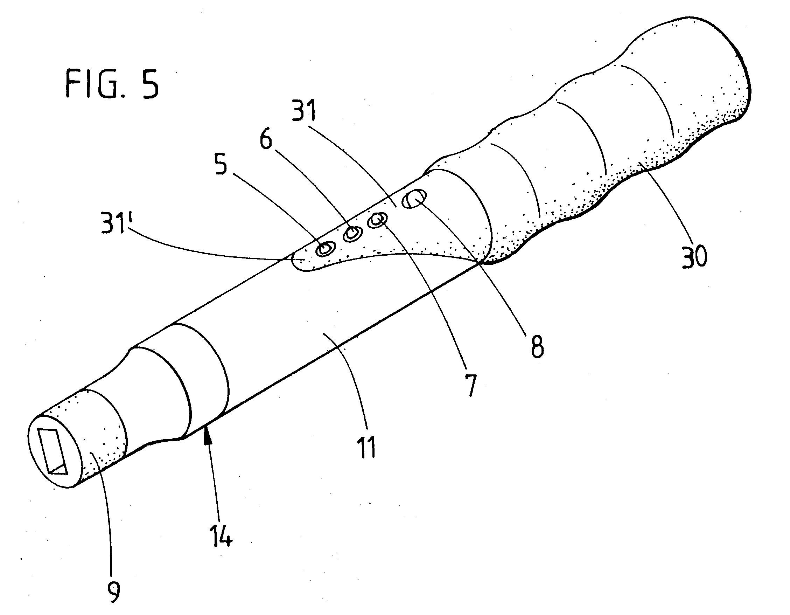

Die in Fig. 5 veranschaulichte dritte Ausführungsform des Drehmomentschlüssels entspricht weitgehend der ersten Ausgestaltung.

Abweichend von dieser setzt sich der endseitig des Rohres 11 festgelegte Handgriff 30 in Richtung des kopfseitigen Endes des Rohres 11 in eine Zunge 31 fort. Diese dient zur reihenförmigen Aufnahme der Leuchtdioden 5, 6, 7 als auch des Betätigungsknopfes 8. Diese Zunge 31 ist dem Krümmungsverlaf des Rohres 11 angepaßt und verbreitert sich, ausgehend von der Zungenspitze 31', in Richtung des Handgriffes 30. Somit bildet die die Leuchtdioden 5, 6, 7 schützende Zunge 31 in gewisser Hinsicht einen Leuchtbalken.

## Patentansprüche

1. Drehmomentschlüssel (1, 2) mit einer elektronischen Meßeinrichtung, die mittels Dehnungsmeßstreifen ein herrschendes Drehmoment erfaßt, mit einem Speicher zur Speicherung von Meßwerten und einer Anzeigeeinrichtung, die mittels farbig unterschiedlicher Leuchtdioden (5, 6, 7) erreichte Minimal- bzw. Maximalwerte anzeigen, dadurch gekennzeichnet, daß ein Meßwert durch Betätigung eines Betätigungsknopfes (8) abspeicherbar ist und eine detaillierte Anzeige eines Meßwertes und eine Änderung der Einstellung des Schlüssels lediglich bei Anschluß an ein gesondertes Programmiergerät möglich ist, wozu an dem Drehmomentschlüssel eine entsprechende Schnittstelle (10) ausgebildet ist.

2. Drehmomentschlüssel nach Anspruch 1, dadurch gekennzeichnet, daß dem Drehmomentschlüssel (1, 2) ein Identifizierungscode zugeordnet ist und daß dieser Identifizierungscode im Speicher abgelegt und lediglich bei Anschluß an das gesonderte Programmiergerät änderbar ist.

3. Drehmomentschlüssel nach einem oder mehreren der vorhergehenden Ansprüche, dadurch gekennzeichnet, daß der Drehmomentschlüssel (1, 2) lediglich durch Anschluß an ein gesondertes Programmiergerät (25, 26) kalibrierbar ist.

4. Drehmomentschlüssel nach einem oder mehreren der vorhergehenden Ansprüche, dadurch gekennzeichnet, daß zur Betätigung der Elektronik an dem Schlüssel lediglich ein Betätigungsknopf (8) vorgesehen ist.

5. Drehmomentschlüssel nach einem oder mehreren der vorhergehenden Ansprüche, dadurch gekennzeichnet, daß der Drehmomentschlüssel ein Rohrteil (11) aufweist und daß die elektronischen Bauteile vollständig in dem Rohrteil (11) aufgenommen sind.

6. Drehmomentschlüssel nach Anspruch 5, gekennzeichnet durch einen am einen Ende des Rohres (11) vorgesehenen Handgriff (30), welcher sich in Richtung des anderen Endes des Rohres (11) in eine sowohl die Leuchtdioden (5, 6, 7) als auch den Betätigungsknopf (8) aufnehmenden Zunge (31) fortsetzt.

7. Drehmomentschlüssel nach Anspruch 6, dadurch gekennzeichnet, daß die Zunge (31) dem Krümmungsverlauf des Rohres (11) angepaßt ist und sich, ausgehend von der Zungenspitze (31'), in Richtung des Handgriffes (30) verbreitert.

## Claims

1. Torque wrench (1, 2) with an electronic measuring device which detects a prevailing torque by means of wire strain gauges, with a memory for storage of measured values and an indicator, which by means of differently coloured light-emitting diodes (5, 6, 7) indicate minimum and maximum values obtained, characterized in that a measured value can be stored by operating an operating button (8), and detailed display of a measured value and a change of setting of the wrench are possible on connection to a separate programming device, for which purpose a corresponding interface (10) is formed on the torque wrench.

2. Torque wrench according to claim 1, characterized in that the torque wrench (1, 2) is assigned an identification code and in that this identification code is filed in the memory and can be changed only on connection to the separate programming device.

3. Torque wrench according to one or more of the preceding claims, characterized in that the torque wrench (1, 2) can be calibrated only by connection to a separate programming device (25, 26).

4. Torque wrench according to one or more of the preceding claims, characterized in that only an operating button (8) is provided on the wrench for operating the electronics.

5. Torque wrench according to one or more of the preceding claims, characterized in that the torque wrench comprises a tube portion (11) and in that the electronic components are fully contained in the tube portion (11).

6. Torque wrench according to claim 5, characterized by a handle (30) which is provided at one end of the tube (11) and which is extended in the direction of the other end of the tube (11) into a tongue (31) containing both the light-emitting diodes (5, 6, 7) and the operating button (8).

7. Torque wrench according to claim 6, characterised in that the tongue (31) is adapted to the curvature of the tube (11) and, starting from the point (31') of the tongue, widens in the direction of the handle (30).

## Revendications

1. Clé dynamométrique (1, 2) munie d'un dispositif de mesure électronique, qui détecte à l'aide de jauges de contrainte un couple appliqué, avec une mémoire apte à mettre en mémoire des valeurs mesurées et avec un dispositif indicateur qui indique à l'aide de diodes colorés de différentes couleurs (5, 6, 7) les valeurs minimales ou maximales atteintes, caractérisée en ce qu'une valeur mesurée est susceptible d'être mise en mémoire par actionnement d'un bouton d'actionnement (8) et en ce qu'une indication détaillée d'une valeur mesurée et d'une variation du réglage de la clé est possible uniquement par connexion à un appareil de programmation spécial, une interface correspondante (10) étant prévue à cet effet sur la clé dynamométrique.

2. Clé dynamométrique selon la revendication 1, caractérisée en ce que la clé dynamométrique (1, 2) est associée à un code d'identification et en ce que ce code d'identification est enregistré dans la mémoire et est susceptible d'être modifié uniquement par connexion à l'appareil de programmation spécial.

3. Clé dynamométrique selon l'une ou plusieurs des revendications précédentes, caractérisée en ce que la clé dynamométrique (1, 2) est susceptible d'être étalonnée uniquement après connexion à un appareil de programmation spécial (25, 26).

4. Clé dynamométrique selon l'une ou plusieurs des revendications précédentes, caractérisée en ce que, pour l'actionnement de l'électronique, un seul bouton d'actionnement (8) est prévu sur la clé.

5. Clé dynamométrique selon l'une ou plusieurs des revendications précédentes, caractérisée en ce que la clé dynamométrique comporte une partie tubulaire (11) et en ce que les composants électroniques sont logés complètement dans la partie tubulaire (11).

6. Clé dynamométrique selon la revendication 5, caractérisée par une poignée (30) prévue à une extrémité du tube (11) et qui se prolonge dans la direction de l'autre extrémité du tube (11) par une languette (31) recevant aussi bien les diodes lumineuses (5, 6, 7) que le bouton d'actionnement (8).

7. Clé dynamométrique selon la revendication 6, caractérisée en ce que la languette (31) est adaptée à la courbure du tube (11) et s'élargit à partir de la pointe de la languette (31') dans la direction de la poignée (30).
